Europäisches Patentamt

European Patent Office

Office européen des brevets

(19)

(11) Veröffentlichungsnummer : **0 589 349 A2**

# (12) EUROPÄISCHE PATENTANMELDUNG

(21) Anmeldenummer : 93114890.2

(22) Anmeldetag : 16.09.93

(51) Int. Cl.⁵ : **C08L 77/00,** C08K 7/04, C08K 7/18, // (C08L77/00, 23:26), (C08L77/00, 51:06)

(30) Priorität : 24.09.92 DE 4231929

(43) Veröffentlichungstag der Anmeldung : 30.03.94 Patentblatt 94/13

(84) Benannte Vertragsstaaten : BE CH DE FR GB LI NL

(71) Anmelder : BASF Aktiengesellschaft
Carl-Bosch-Strasse 38
D-67063 Ludwigshafen (DE)

(72) Erfinder : Hurley, James, Dr.
Naumburger Weg 4
D-68309 Mannheim 31 (DE)

Erfinder : Goetz, Walter, Dr.
Dhauner Strasse 79
D-67057 Ludwigshafen (DE)
Erfinder : Pellkofer, Erich
Mozartstrasse 4
D-67112 Mutterstadt (DE)
Erfinder : Lohrbaecher, Volker
Kisslichstrasse 1
D-69469 Weinheim (DE)
Erfinder : Fisch, Herbert, Dr.
In der Eselsweide 8
D-67157 Wachenheim (DE)
Erfinder : Ulmerich, Karlheinz
Erzbergerstrasse 4a
D-67245 Lambsheim (DE)
Erfinder : Hofmann, Juergen
Muenchbuschweg 30c
D-67069 Ludwigshafen (DE)

(54) **Polyamidformmassen zur Herstellung von Formkörpern mittels Blasformen, Profilextrusion und Rohrextrusion.**

(57) Verwendung von thermoplastischen Polyamidformmassen, enthaltend
A) 40 - 99,7 Gew.-% eines Polyamids mit einer Viskositätszahl $\geqq$ 250 ml/g
B) 0,3 - 3 Gew.-% eines Olefinpolymerisates, aufgebaut aus
$b_1$) 40 - 99,8 Gew.-% mindestens eines $\alpha$-Olefins mit 2 - 8 C-Atomen,
$b_2$) 0,2 - 20 Gew.-% einer ethylenisch ungesättigten Mono- oder Dicarbonsäure oder einem funktionellen Derivat einer solchen Säure,
C) 0 - 50 Gew.-% faser- oder teilchenförmige Füllstoffe oder deren Mischungen
D) 0 - 30 Gew.-% übliche Zusatzstoffe und Verarbeitungshilfsmittel
zur Herstellung von Formkörpern durch Blasformen, Profilextrusion und/oder Rohrextrusion.

EP 0 589 349 A2

Die Erfindung betrifft die Verwendung von thermoplastischen Polyamidformmassen, enthaltend

A) 40 - 99,7 Gew.-% eines Polyamids mit einer Viskositätszahl $\geqq$ 250 ml/g

B) 0,3 - 3 Gew.-% eines Olefinpolymerisates, aufgebaut aus

$b_1$) 40 - 99,8 Gew.-% mindestens eines $\alpha$-Olefins mit 2 - 8 C-Atomen,

$b_2$) 0,2 - 20 Gew.-% einer ethylenisch ungesättigten Mono- oder Dicarbonsäure oder einem funktionellen Derivat einer solchen Säure,

C) 0 - 50 Gew.-% faser- oder teilchenförmige Füllstoffe oder deren Mischungen

D) 0 - 30 Gew.-% übliche Zusatzstoffe und Verarbeitungshilfsmittel

zur Herstellung von Formkörpern durch Blasformen, Profilextrusion und/oder Rohrextrusion.

Weiterhin betrifft die Erfindung ein Verfahren zur Herstellung der verwendbaren Polyamidformmassen und die daraus erhältlichen Formkörper.

Polyamide sind eine Klasse von technischen Werkstoffen, die in vielen Bereichen Anwendung finden, da sie ein insgesamt interessantes Eigenschaftsspektrum aufweisen.

In einer Vielzahl von Anmeldungen werden Polyamidformmassen beschrieben, die für bestimmte Anwendungen gezielt modifiziert wurden. Nur beispielhaft sei die DE-A-26 22 973 genannt, in welcher eine Vielzahl von möglichen Schlagzähmodifiern für Polyamid beschrieben sind.

Zähmodifizierte Polyamide mit Ethylencopolymeren sind u.a. aus der EP-A-279 578 bekannt; Glasfaserhaltige Formmassen sind aus der DE-A 27 03 416 bekannt, welche Ethylen- oder Propylenhomopolymere enthalten, die mit ungesättigten Säuren gepfropft sind.

Die bekannten zähmodifizierten Polyamide lassen sich aber nur bedingt zu Blasformkörpern verarbeiten. Beim Blasformen wird allgemein ein Schlauch aus Polymerschmelze extrudiert, der zwischen den beiden Halbschalen des geöffneten Werkzeuges hängt. Anschließend wird das Werkzeug geschlossen und der Polymerschlauch durch Gas-Innendruck gegen das Werkzeug gepreßt, abgekühlt und entformt.

Wesentliche Voraussetzung bei dieser Verarbeitung ist, daß der Polymerschlauch beim Extrudieren in den Zeiträumen, wo er frei zwischen den Werkzeugen hängt, nicht abreißt, so daß der Formungsvorgang zu Ende geführt werden kann. Wünschenswert ist darüberhinaus auch, daß der Schlauch nicht "durchhängt", da hierbei geringe Wandstärken in der oberen Hälfte und dickere Wandstärken in der unteren Hälfte entstehen. Hohlkörper mit unterschiedlichen Wandstärken sind zur Verwendung nicht geeignet, da die Belastbarkeit in der Regel von der Stelle mit der geringsten Wandstärke begrenzt wird. Die aus der JP-A 62/252 453 und WO-A 90/7549 bekannten Formmassen eignen sich daher nur sehr beschränkt für das Blasformverfahren, da die Schlauchfestigkeit zu gering ist.

Besonders problematisch ist die Gefahr eines Schmelzebruchs bzw. Durchhängens bei glasfaserverstärkten Polymerschmelzen, da diese eine hohe Dichte (und dadurch eine hohe Zugkraft auf den oberen Teil des Polymerschlauches) aufweisen und gleichzeitig die maximale Dehnbarkeit der Polymerschmelze vor dem Bruch bei diesen verstärkten Massen geringer ist.

Beide Faktoren werden von der sog. Schmelzesteifigkeit, die in erster Linie von der Schmelzeviskosität abhängt, bestimmt. Ideal wäre eine hohe Schmelzviskosität bei geringer Scherung - d.h. nach der Extrusion - aber eine niedrige Schmelzviskosität unter hohem Schergefälle - d.h. im Verarbeitungsextruder.

Folglich werden zum Blasformen üblicherweise hochmolekulare Polyamide eingesetzt wie aus der DE-A-38 31 243 und JP-A 60/171 133 bekannt.

Das Konfektionieren hochmolekularer Polyamide mit Glasfasern ist aber nicht möglich, da beim Konfektionieren ein Molekulargewichtsabbau eintritt, so daß - auch bei Verwendung von hochmolekularen Ausgangspolymeren - in jedem Fall zum Blasformen ungeeignete, glasfaserhaltige Massen entstehen.

Die US-A 5 026 763 beschreibt eine Granulatmischung aus PA6 und glasfaserhaltigem PA66 mit hohem Molekulargewicht für den Blasformprozeß. Die Fließfähigkeit derartiger Mischungen ist zwar verbessert worden, aber die geringen Gesamtglasfasergehalte führen zu eingeschränkten mechanischen Eigenschaften. Die Handhabung von Granulatmischungen führt meist zu inhomogenen Formkörpern (Entmischung). Ferner muß die Verarbeitungstemperatur über dem Schmelzpunkt der höherschmelzenden Komponente liegen, was zu niedriger Schmelzviskosität der niedriger schmelzenden Komponente führt und somit zu einer schlechten Verarbeitbarkeit der Mischung.

Der vorliegenden Erfindung lag daher die Aufgabe zugrunde, Polyamidformmassen zur Verfügung zu stellen, die sich verstärkt und unverstärkt problemlos zu Blasformkörpern, Profilextrudaten, oder Rohrextrudaten verarbeiten lassen, so daß insbesondere Formkörper mit großem Volumen aus diesen Massen herstellbar sind.

Erfindungsgemäß wird diese Aufgabe durch die Verwendung von Polyamidformmassen gemäß Anspruch 1 gelöst.

Bevorzugte Ausführungsformen sind den Unteransprüchen zu entnehmen.

Überraschenderweise wurde gefunden, daß der in geringen Mengen vorliegende Kautschuk, die Schmelzviskosität der Polyamidformmassen erhöht, u.z. sowohl bei verstärkten wie auch bei unverstärkten Massen.

Zusätzlich beeinflußt der Kautschuk bei der Herstellung derartiger Massen den bevorzugten Temperprozeß nicht.

Die verwendbaren Polyamide sind an sich bekannt. Beispiele hier- für sind Polyhexamethylenadipinsäureamid, Polyhexamethylenpimelinsäureamid, Polyhexamethylenkorksäureamid, Polyhexamethylenazelainsäureamid, Polyhexamethylensebacinsäureamid, Polyhexamethylendodekandisäureamid, Polyoctamethylenkorksäureamid, Polydodekamethylendodekandisäureamid, Poly-11-aminoundekansäureamid und Bis-(4-aminocyclohexyl)-methandodekansäureamid oder die durch Ringöffnung von Lactamen, z.B. Polycaprolactam oder Polylaurinlactam, erhaltenen Produkte. Auch Polyamide auf der Basis von Terephthal- oder Isophthalsäure als Säurekomponente und/oder Trimethylhexamethylendiamin, Bis-(4-aminocyclohexyl)-methan oder 2,2-Di-(4-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür seien Copolykondensate aus Terephthalsäure, Hexamethylendiamin und Caprolactam (PA 6/6T) genannt, sowie aus Terephthalsäure, Isophthalsäure, Adipinsäure und Hexamethylendiamin (PA 6T/6I/66).

Vorzugsweise setzt man teilkristalline Polyamide ein, bevorzugt PA 6, PA 66, PA 6/6T, PA 66/6T (Copolykondensat aus Hexamethylendiamin, Adipinsäure, Caprolactam und Terephthalsäure) sowie PA 46.

Die Herstellung dieser Polyamide erfolgt in an sich bekannter Weise (s. z.B. Encyclopedia of Polymer Science and Engineering, Vol. 11, S. 315 bis 489, John Wiley & Sons, Inc. 1988.

Das Verhältnis von endständigen Säuregruppen zu endständigen Aminogruppen kann durch Variation des Molverhältnisses der Ausgangsverbindungen gesteuert werden.

Die Viskositätszahl VZ der verwendbaren Polyamide beträgt $\geqq$ 250 ml/g, bevorzugt 270-350 ml/g und insbesondere 290-320 ml/g. Diese werden üblicherweise nach ISO 307 oder DIN 53 727 an 0,5 gew.-%igen Lösungen in 96 gew.-%iger Schwefelsäure bei 25°C bestimmt.

Der Anteil der Polyamide in den Formmassen beträgt 40 bis 99,7, vorzugsweise 60 bis 94 und insbesondere 65 bis 89 Gew.-%.

Es können auch Mischungen verschiedener Polyamide eingesetzt werden.

Der Anteil der Olefinpolymerisate B) in den Formmassen beträgt 0,3 bis 3, vorzugsweise 0,5 bis 2 und insbesondere 0,7 bis 1,4 Gew.-%.

Diese sind aufgebaut aus:

$b_1$) 40 - 99,8, vorzugsweise 60 - 99 Gew.-% mindestens eines $\alpha$-Olefins mit 2 - 8 C-Atomen,

$b_2$) 0,2 bis 20, vorzugsweise 1 - 10 Gew.-% einer ethylenisch ungesättigten Mono- oder Dicarbonsäure oder einem funktionellen Derivat einer solchen Säure.

Als geeignete $\alpha$-Olefine $b_1$) seien geradkettige oder verzweigte Butene, Pentene, Hexene, Heptene, Octene genannt, wobei Ethylen und Propylen bevorzugt sind.

Geeignete Monomere $b_2$) sind Maleinsäure, Fumarsäure, Acrylsäure, Methacrylsäure, Itaconsäure oder deren funktionelle (reaktive) Derivate wie Anhydride oder Säureazide, wobei Maleinsäureanhydrid und Acrylsäure bevorzugt sind.

Die Olefinpolymerisate können darüberhinaus bis zu 50 Gew.-%, vorzugsweise bis zu 30 Gew.-% weiterer Monomere $b_3$) enthalten.

Beispiele für derartige Monomere, die unter den Verarbeitungsbedingungen keine Reaktion mit dem Polyamid eingehen, sind Acrylsäureester mit 4 bis 22 C-Atomen wie Methylacrylat, Methylmethacrylat, Butylacrylat, Ethylhexylacrylat, Cyclohexylacrylat und Ethylacrylat.

Vinylester von Säuren mit 1 bis 20 C-Atomen wie Vinylacetat oder Vinylpropionat, Vinylether mit 3 bis 20 C-Atomen wie Vinylbutylether, wobei Methacrylat und Butylacrylat bevorzugt sind.

Bevorzugt sind Olefinpolymerisate, welche keine Monomere $b_3$) enthalten.

Bevorzugte Olefinpolymeriste sind Ethylencopolymerisate mit Acrylsäure oder Polymerisate aus Polypropylen, welche mit Acrylsäure oder Maleinsäureanhydrid gepfropft sind.

Die Herstellung der vorstehend beschriebenen Olefinpolymerisate kann nach an sich bekannten Verfahren erfolgen, welche in der Literatur beschrieben sind.

Der Schmelzindex der Olefinpolymerisate liegt im allgemeinen von 1 bis 100 g/10 min, vorzugsweise 5 bis 25 g/10 min (gemessen bei 190°C und 2,16 kg Belastung).

Selbstverständlich können auch Mischungen der vorstehenden Olefinpolymerisate eingesetzt werden.

Als Komponente C) können die erfindungsgemäß verwendbaren Formmassen 0 bis 50, vorzugsweise 5 bis 35 und insbesondere 10 bis 25 Gew.-% eines faser- oder teilchenförmigen Füllstoffes oder Mischungen solcher Füllstoffe enthalten.

Als faserförmige Füllstoffe seien hier nur beispielsweise Glasfasern, Kohlenstoffasern, Aramid-Fasern, Kaliumtitanat-Fasern und faserförmige Silikate wie Wollastonit genannt, bevorzugt Glasfasern.

Bei der Verwendung von Glasfasern können diese zur besseren Verträglichkeit mit dem thermoplastischen Polyamid mit einer Schlichte und einem Haftvermittler, bevorzugt einem Aminosilan, ausgerüstet sein.

Im allgemeinen haben die verwendeten Glasfasern einen Durchmesser im Bereich von 6 bis 20 μm. Die Einarbeitung kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 5 mm.

Als teilchenförmige Füllstoffe seien hier nur stellvertretend Glaskugeln, teilchenförmiger Wollastonit, Quarzmehl, Bornitrid, Kaolin, Calciumcarbonat (Kreide), Magnesiumcarbonat und Titandioxid genannt, wovon Wollastonit, Titandioxid und Kaolin im allgemeinen bevorzugt werden.

Neben den wesentlichen Komponenten A) und B) sowie gegebenenfalls C) können die erfindungsgemäßen Formmassen übliche Zusatzstoffe und Verarbeitungshilfsmittel D) enthalten. Deren Anteil beträgt in der Regel bis zu 30 Gew.-% vorzugsweise bis zu 10 Gew.-%, bezogen auf das Gesamtgewicht der Komponenten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher und Flammschutzmittel.

Oxidationsverzögerer und Wärmestabilisatoren, die den thermoplastischen Massen gemäß der Erfindung zugesetzt werden können, sind z.B. Halogenide, ausgewählt aus der Gruppe von Metallen der Gruppe I des Periodensystems, z.B. Lithium-, Natrium-, Kalium-Halogenide, und Kupfer-(I)-Halogenide, z.B. Chloride, Bromide oder Iodide, oder Mischungen davon. Weiterhin kann man Zinkfluorid und Zinkchlorid verwenden. Ferner kann man sterisch gehinderte Phenole, sekundäre, aromatische Amine, Hydrochinone, substituierte Vertreter dieser Gruppe und Mischungen dieser Verbindungen, vorzugsweise in Konzentration bis zu 1 Gew.-%, bezogen auf das Gewicht der Mischung, einsetzen.

Beispiele für UV-Stabilisatoren sind substituierte Resorcine, sterisch gehinderte Phenole, Salicylate, Benzotriazole und Benzophenone, die man im allgemeinen in Mengen bis zu 2 Gew.-% einsetzen kann.

Gleit- und Entformungsmittel, die man in der Regel bis zu 1 Gew.-% der thermoplastischen Masse zusetzen kann, sind beispielsweise Stearinsäure, Stearylalkohol, Stearinsäurealkylester und -amide sowie Ester des Pentaerythrits mit langkettigen Fettsäuren.

Als Flammschutzmittel kann man beispielsweise roten oder schwarzen Phosphor oder eine phosphorhaltige Verbindung in Mengen von 3 bis 10 Gew.-% einsetzen.

Bevorzugtes Flammschutzmittel ist elementarer Phosphor, insbesondere in Kombination mit glasfaserverstärkten Formmassen, der in unbehandelter Form eingesetzt werden kann.

Besonders eignen sich jedoch Zubereitungen, in denen der Phoshor oberflächlich mit niedermolekularen flüssigen Substanzen wie Silikonöl, Paraffinöl oder Estern der Phthalsäure oder Adipinsäure oder mit polymeren oder oligomeren Verbindungen, z.B. mit Phenolharzen oder Aminoplasten sowie Polyurethanen beschichtet sind.

Weitere bevorzugte Flammschutzmittel sind organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt. Dieses kann allein oder vermischt mit Hexabrombenzol oder einem chlorierten Biphenyl und, wahlweise, Antimontrioxid verwendet werden.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Die Herstellung der erfindungsgemäß verwendbaren Formmassen kann nach an sich bekannten Verfahren erfolgen. Bevorzugt erfolgt die Herstellung durch Zugabe der Komponente B) sowie gegebenenfalls C) zur Schmelze der Komponente A) sowie gegebenenfalls D), wobei die Komponente A eine Viskositätszahl $\leq$ 190, vorzugsweise $\leq$ 200, und insbesondere $\leq$ 225 ml/g aufweist.

Zweckmäßigerweise verwendet man hierzu Extruder, z.B. Einschnekken- oder Zweischneckenextruder oder andere herkömmliche Plastifizierungsvorrichtungen wie Brabender-Mühlen oder Banbury-Mühlen.

Die Kunststoffmischungen unterwirf man danach in der Regel einer weiteren thermischen Behandlung. In Temperaggregaten wie z.B. einem Taumler-Mischer oder kontinuierlich oder diskontinuierlich betriebenen Temperrohren tempert man die in der jeweiligen Bearbeitungsform vorliegende Formmasse, bis die Viskositätszahl des Polyamids die gewünschte VZ von $\geq$ 250 ml/g und darüber erreicht. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das erfindungsgemäße Verfahren erfolgt vorzugsweise in einer Inertgasatmosphäre, wobei Stickstoff als Inertgas bevorzugt ist.

Die Verweilzeiten betragen im allgemeinen von 0,5 bis 50, vorzugsweise 4 bis 20 Stunden. Die Temperung bietet keine Probleme, da das eingesetzte Olefinpolymerisat den Molekulargewichtsaufbau des Polyamids nicht behindert. Anschließend werden aus den Formmassen mittels üblicher Vorrichtungen für das Blasformen, Profilextrusion und Rohrextrusion Formteile hergestellt.

4

Die Schmelzviskosität der Formmassen ist soweit erhöht, daß sich Formkörper insbesondere glasfaserhaltige mit großen Volumina herstellen lassen, welche eine gleichmäßige Wandstärke über das gesamte Formteil aufweisen. Als Anwendungen seien Kraftstoff-, Schmiermittel- oder Bremsflüssigkeitsbehälter im KFZ genannt.

Beispiele

Komponente A (vor der Bearbeitung):

A/1: Poly-$\varepsilon$-Caprolactam (PA 6) mit einer Viskositätszahl VZ von 180 ml/g (gemessen gemäß DIN 53 727, Ultramid® B35 der BASF AG).
A/2: PA 6 mit einer VZ von 215 ml/g (Ultramid® B4 der BASF AG).
A/3: PA 6 mit einer VZ von 285 ml/g (Ultramid® B5 der BASF AG).

Komponente B

B/1: ein mit 6 Gew.-% Acrylsäure gepfropftes Polypropylen, MFI (190°C/2,16 kg) von 22 g/10 min. (Polybond® 1009 der BP Chemicals Ltd.).
B/2: Ethylencopolymerisat mit 7 Gew.-% Acrylsäure; MFI (190°C/2,16 kg) von 10,5 g/10 min. (Lucalen® A3710 MX der BASF AG).

Komponente C:

Schnittglasfasern mit einer Faserlänge von 6 mm und 10 $\mu$m Filamentdurchmesser, welche mit einer Aminosilanschlichte beschichtet waren. (Silenka® 8044 der Silenka).

Komponente D)

Wärmestabilisator auf CuI/KI Komplexbasis.

Herstellung der Mischungen

Die Komponenten A) und D) wurden in einem Zweischneckenextruder (ZSK 53) bei 280°C (40 kg/h Durchsatz; 120 U/min) dosiert und zu einer homogenen Schmelze verarbeitet. In diese Polymerschmelze wurden gegebenenfalls Glasfasern C und anschließend Komponente B) zudosiert, homogenisiert, extrudiert und granuliert.
Die erhaltenen Granulate wurden in einem doppelwandigen Glasrohr (mit 120 1/h $N_2$ durchströmt) von 10 cm Innendurchmesser und 140 cm Innenlänge bei 180°C auf die in den Tabellen angegebene Endviskositatszahl getempert, wobei die Temperzeit zwischen 12 und 18 h lag.
Auf einer Extrusionsblasformmaschine (Fa. Voith) wurden bei 275°C mittels diskontinuierlicher Fahrweise rechteckige Hohlkörper von 18,5 x 18,5 cm Querschnitt und 61 cm Länge (Volumen ca. 21 l, Gewicht zwischen 1 und 2 kg) hergestellt.

Meßmethoden:

Die Ermittlung der Wandstärke erfolgt durch Messungen jeweils 10 cm unterhalb bzw. oberhalb des Bodens bzw. Deckels des Hohlkörpers. Der MVI des Polyamids wurde gemäß DIN 53 735 bei 10 kg Belastung und den in den Tabellen angegebenen Temperaturen bestimmt.

Zusammensetzungen der Formmassen

Alle Zusammensetzungen enthielten 100 ppm Cu in Form eines CuI/KI Komplexes.
Die Ergebnisse der Messungen und die Zusammensetzung der Formmassen sind den Tabellen zu entnehmen.

Tabelle 1

| Beispiel | 1*) | 2 | 3 | 4* | 5* | 6* | 7* | 8 | 9* |
|---|---|---|---|---|---|---|---|---|---|
| Polyamid [Gew.-%] | 78,5 A/1 | 78,5 A/1 | 78,5 A/1 | 72 A/1 | 80 A/1 | 80 A/1 | 78,5 A/2 | 78,5 A/2 | 78,5 A/3 |
| Modifier [Gew.-%] | 1,5 B/1 | 1,5 B/1 | 1,5 B/2 | 8 B/1 | – | – | 1,5 B/1 | 1,5 B/1 | 1,5 B/1 |
| Glasfasern [Gew.-%] | 20 | 20 | 20 | 20 | 20 | 20 | 20 | 20 | 20 |
| VZ [ml/g] des Vorproduktes | 180 | 180 | 180 | 180 | 148 | 148 | 222 | 222 | 285 |
| VZ [ml/g] nach der Konfektionierung | 156 | 156 | 152 | 149 | 149 | 145 | 160 | 160 | 165 |
| VZ [ml/g] nach der Temperung | – | 286 | 277 | 252**) | – | 280 | – | 290 | – |
| MVI 250°C [g/10 min] | 90,4 | 3,5 | 5,3 | 18,6 | 107,3 | 16,7 | 95,5 | 2,9 | 66,0 |
| Dicke oben [mm] | – | 2,7 | 3,0 | 1,1 | – | 1,4 | – | 3,5 | – |
| Dicke unten [mm] | – | 3 | 3,4 | 2,9 | – | 2,9 | – | 3,8 | – |
| Verarbeitbarkeit | -- | ++ | ++ | +/- | -- | +/- | -- | ++ | -- |

*) zum Vergleich

**) konstante VZ ab 16 h Temperung, auch nach 48 h Tempern keine weitere Erhöhung der VZ.

EP 0 589 349 A2

Tabelle 2

| Beispiel | 10* | 11 | 12* | 13* | 14* |
|---|---|---|---|---|---|
| Polyamid [Gew.-%] | 98,5 A/1 | 98,5 A/1 | 100 A/1 | 100 A/3 | 98,5 A/3 |
| Modifier [Gew.-%] | 1,5 B/1 | 1,5 B/1 | – | – | 1,5 B/1 |
| VZ [ml/g] des Vorproduktes | 180 | 180 | 180 | 180 | 185 |
| VZ [ml/g] nach der Konfektionierung | 165 | 165 | 169 | 169 | 178 |
| VZ [ml/g] nach der Temperung | – | 288 | – | 280 | – |
| MVI 250°C [g/10 min] | 43,1 | 6,9 | 32,1 | 6,1 | 29,5 |
| Dicke oben [mm] | – | 4,0 | – | 3,2 | – |
| Dicke unten [mm] | – | 4,8 | – | 5,0 | – |
| Verarbeitbarkeit | -- | ++ | -- | +/- | -- |

*)   zum Vergleich

EP 0 589 349 A2

**Patentansprüche**

1. Verwendung von thermoplastischen Polyamidformmassen, enthaltend
   A) 40 - 99,7 Gew.-% eines Polyamids mit einer Viskositätszahl $\geqq$ 250 ml/g
   B) 0,3 - 3 Gew.-% eines Olefinpolymerisates, aufgebaut aus
      $b_1$) 40 - 99,8 Gew.-% mindestens eines $\alpha$-Olefins mit 2 - 8 C-Atomen,
      $b_2$) 0,2 - 20 Gew.-% einer ethylenisch ungesättigten Mono- oder Dicarbonsäure oder einem funktionellen Derivat einer solchen Säure,
   C) 0 - 50 Gew.-% faser- oder teilchenförmige Füllstoffe oder deren Mischungen
   D) 0 - 30 Gew.-% übliche Zusatzstoffe und Verarbeitungshilfsmittel
   zur Herstellung von Formkörpern durch Blasformen, Profilextrusion und/oder Rohrextrusion.

2. Verwendung von thermoplastischen Polyamidformmassen nach Anspruch 1, in denen die Komponente A) eine Viskositätszahl $\geqq$ 260 ml/g aufweist.

3. Verwendung von thermoplastischen Polyamidformmassen nach den Ansprüchen 1 und 2, in denen die Komponente B) ein Ethylen-Acrylsäurecopolymer oder ein mit Maleinsäureanhydrid gepfropftes Polypropylenhomopolymer ist.

4. Verfahren zur Herstellung von den gemäß den Ansprüchen 1 bis 3 verwendbaren Polyamidformmassen, dadurch gekennzeichnet, daß die Komponente B) und gegebenenfalls C) der Schmelze der Komponente A) und gegebenenfalls D) zugegeben wird, wobei die Komponente A) eine Viskositätszahl $\leqq$ 190 ml/g aufweist und anschließend diese Mischungen bei Temperaturen von 5 bis 50°C unterhalb des Schmelzpunktes der reinen Komponente A) unter Inertgasbedingungen über einen Zeitraum von 0,5 bis 50 Stunden thermisch nachbehandelt werden.

5. Blasformkörper, erhältlich aus den gemäß den Ansprüchen 1 bis 3 verwendbaren Polyamidformmassen.

6. Profilextrudate, erhältlich aus den gemäß den Ansprüchen 1 bis 3 verwendbaren Polyamidformmassen.

7. Rohrextrudate, erhältlich aus den gemäß den Ansprüchen 1 bis 3 verwendbaren Polyamidformmassen.